Europäisches Patentamt

(19) European Patent Office

Office européen des brevets

(11) Numéro de publication : **0 089 329**
**B1**

(12) **FASCICULE DE BREVET EUROPÉEN**

(45) Date de publication du fascicule du brevet :
**16.06.87**

(21) Numéro de dépôt : **83870019.3**

(22) Date de dépôt : **11.03.83**

(51) Int. Cl.⁴ : **C 10 J   3/04**, **C 10 J   3/80**

(54) Procédé et installation de gazéification de charbon sous pression.

(30) Priorité : **11.03.82 LU 84001**
**02.07.82 LU 84254**

(43) Date de publication de la demande :
**21.09.83 Bulletin 83/38**

(45) Mention de la délivrance du brevet :
**16.06.87 Bulletin 87/25**

(84) Etats contractants désignés :
**AT BE CH DE FR GB IT LI NL SE**

(56) Documents cités :
**DE-C-   24 137**
**DE-C-   445 119**
**FR-A- 1 453 921**
**GB-A-   508 617**
**GB-A-   530 705**

(73) Titulaire : **Société DISTRIGAZ**
**31, avenue des Arts**
**B-1040 Bruxelles (BE)**

(72) Inventeur : **Ribesse, Jacques**
**70, Avenue J. Fr. Leemans**
**B-1160 Bruxelles (BE)**

(74) Mandataire : **De Brabanter, Maurice et al**
**Bureau VANDER HAEGHEN 63 Avenue de la Toison d'Or**
**B-1060 Bruxelles (BE)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**0 089 329**

## Description

La présente invention est relative à un procédé et à une installation de gazéification de charbon dans une paire d'enceintes communiquant entre elles à leur partie supérieure et comprenant un dispositif d'alimentation en charbon par le haut.

On injecte, au cours de cycles successifs de durée prédéterminée, des gaz réactifs dans une des enceintes puis dans l'autre, pendant qu'on évacue les gaz de réaction par le bas de l'enceinte située en aval de celle dans laquelle sont injectés les gaz réactifs.

On connaît par ailleurs un procédé autothermique de gazéification de charbon mettant en œuvre un nombre pair de gazogènes connectés deux à deux alternativement en parallèle et en série suivant un cycle de fonctionnement à quatre phases.

Dans ce procédé, mis au point par les firmes BASF-Flesch-Demag, les gaz produits dans l'un des gazogènes traversent, pendant une des quatre phases, la zone de haute température régnant à ce moment dans l'autre gazogène, en vue de transformer par craquage les goudrons et autres produits secondaires.

Le lit de charbon est régulièrement remué par un mélange d'air et de vapeur injecté par la base de chacun des gazogènes.

Le procédé connu est applicable pour la gazéification du charbon ou du lignite aussi bien à l'air qu'à l'oxygène. Les gaz de réaction sortent à température modérée et contiennent peu de méthane, ce qui est intéressant pour la synthèse.

Un des inconvénients majeurs de ce procédé est qu'on prévoit quatre vannes à inversion pour séparer les circuits d'oxygène et les circuits des gaz de réaction dans les zones de températures élevées. Une telle disposition des vannes est inacceptable car une inétanchéité de celles-ci entraînerait des risques graves d'explosion dans les circuits susdits.

En outre, on connaît par le brevet allemand DE-C-24137 (Sutherland) un procédé et une installation de gazéification de charbon mettant en œuvre suivant un cycle à deux phases, deux gazogènes connectés entre eux. Par ailleurs, l'installation de gazéification selon DE-C-24137 comporte une paire de réchauffeurs-régénérateurs disposés symétriquement de part et d'autre de l'ensemble des deux gazogènes, les deux gazogènes étant capables d'opérer soit sous pression, soit sous aspiration.

A chaque cycle, on inverse simultanément le sens de circulation des gaz produits dans un des générateurs, de manière à les conduire successivement dans l'autre générateur et dans un des réchauffeurs-régénérateurs associés à cet autre générateur. Les réacteurs sont munis d'orifices d'attisoirs et le collecteur de gaz produit est relié à un exhausteur par lequel l'air est amené à travers l'ensemble de l'appareil. Par ailleurs, des cendriers et des chariots d'évacuation sont placés sous les grilles sur lesquelles pose le combustible.

On connaît enfin par le brevet français FR-A-1 453 421 (Stookey), un procédé autothermique de gazéification de charbon mettant en œuvre deux gazogènes connectés entre eux suivant un cycle à deux phases. Dans la partie inférieure où règnent les températures les plus élevées se trouve une grille qui reçoit les cendres brûlées du combustible et où les cendres sont éliminées, sans qu'en soit décrit ni suggéré un moyen permettant un fonctionnement continu du procédé.

En outre, les vannes d'inversion sont montées dans les conduites d'évacuation des gaz chauds.

La présente invention vise à réduire les besoins en gaz réactifs, à savoir en air ou en oxygène comprimé et en eau, à augmenter le rendement de conversion du charbon en gaz utile, et à réduire la consommation d'énergie et en vue de limiter les coûts de l'installation.

Le procédé et l'installation suivant l'invention peuvent être utilisés pour produire, au départ de charbon brut, de toutes formes, présentant des granulométries inférieures, par exemple, à 50 mm et contenant jusqu'à 50 % de fines inférieures à 4 mm, un gaz à pouvoir calorifique moyen sous pression élevée, destiné au réseau de distribution ou un gaz de synthèse à faible teneur en méthane ou un gaz pauvre à usage industriel sous pression moyenne, par exemple 2 à 5 bars, ou encore un gaz utilisable dans une centrale électrique, en cycles combinés dans des turbines à gaz et/ou des chaudières, sous pression adéquate, par exemple de 10 à 20 bars.

Le procédé suivant l'invention, qui utilise une paire d'enceintes communiquant entre elles à leur partie supérieure et comprenant un dispositif d'alimentation en charbon par le haut et dans lequel, au cours de cycles successifs de durée prédéterminée, on injecte des gaz réactifs alternativement dans une des enceintes, puis dans l'autre enceinte, pendant qu'on évacue des gaz de réaction de l'enceinte située en aval de celle dans laquelle sont injectés les gaz réactifs, procédé suivant lequel au cours de chacun des cycles précités, on réchauffe les gaz réactifs destinés à être injectés dans une enceinte en les faisant passer dans un réchauffeur-récupérateur qui est relié à cette enceinte en amont de celle-ci et dans lequel a été récupérée, au cours du cycle précédent, la chaleur sensible des gaz de réaction évacués de cette enceinte, tandis qu'on récupère la chaleur sensible des gaz de réaction évacués de l'autre enceinte, en faisant passer ces gaz de réaction dans un réchauffeur-récupérateur qui est relié à cette autre enceinte en aval de cette dernière, chaque réchauffeur-récupérateur agissant alternativement comme récupérateur de la chaleur sensible des gaz de réaction et comme réchauffeur des gaz réactifs, pendant les cycles successifs susdits, est caractérisé en ce qu'on gazéifie le charbon sous une pression comprise entre 200 et 3 000 kPa (2 à 30 bars).

Suivant une autre particularité du procédé suivant l'invention, à chaque changement de cycle, on inverse simultanément le sens de circulation des gaz dans les enceintes et dans les réchauffeurs-récupérateurs associés à ces enceintes.

L'installation suivant l'invention, qui comprend deux enceintes ou gazogènes communiquant entre eux à leur partie supérieure pour permettre le passage de gaz d'un gazogène dans l'autre, au moins une source de gaz réactifs, et comprenant un dispositif d'alimentation en charbon par le haut, un conduit d'évacuation des gaz de réaction, ainsi que des moyens pour injecter les gaz réactifs et évacuer les gaz de réaction tour à tour dans chacune des enceintes, est essentiellement caractérisée en ce qu'elle comporte deux réchauffeurs-récupérateurs disposés symétriquement de part et d'autre de l'ensemble des deux enceintes, chaque réchauffeur-récupérateur étant relié, d'une part, à des moyens d'injection des gaz réactifs et à des moyens d'évacuation des gaz de réaction d'une enceinte et, d'autre part, à la source de gaz réactifs par une tuyauterie commune dans laquelle sont montées des vannes à inversion, ainsi qu'au conduit d'évacuation des gaz de réaction également muni de vannes à inversion de manière à permettre aux gaz réactifs et aux gaz de réaction de circuler sous une pression comprise entre 200 et 3 000 kPa (2 à 30 bars) alternativement dans un sens puis dans l'autre dans les réchauffeurs-récupérateurs au cours de cycles successifs de durée prédéterminée.

Dans une forme de réalisation particulière de l'installation suivant l'invention, on prévoit des moyens de commande agissant sur les vannes susdites, de façon à permettre l'admission des gaz réactifs dans un réchauffeur-récupérateur, tout en isolant ce réchauffeur-récupérateur du conduit d'évacuation des gaz de réaction et de façon à interdire simultanément l'admission des gaz réactifs dans l'autre réchauffeur-récupérateur, tout en permettant l'évacuation des gaz de réaction de cet autre réchauffeur-récupérateur par la conduite d'évacuation des gaz de réaction au cours des cycles successifs.

D'autres particularités et détails de l'invention ressortiront de la description suivante des dessins schématiques ci-annexés qui représentent à titre illustratif une forme de réalisation de l'invention.

Dans ces dessins :

— les figures 1 et 2 sont des schémas d'ensemble d'une première forme de réalisation d'une installation de gazéification de charbon suivant l'invention, au cours de deux cycles successifs de fonctionnement de cette installation ;

— la figure 3 est une coupe longitudinale d'une tuyère destinée à injecter les gaz réactifs dans un gazogène ;

— la figure 4 est une coupe verticale d'un réchauffeur-récupérateur.

Dans ces différentes figures, les mêmes notations de référence désignent des éléments identiques.

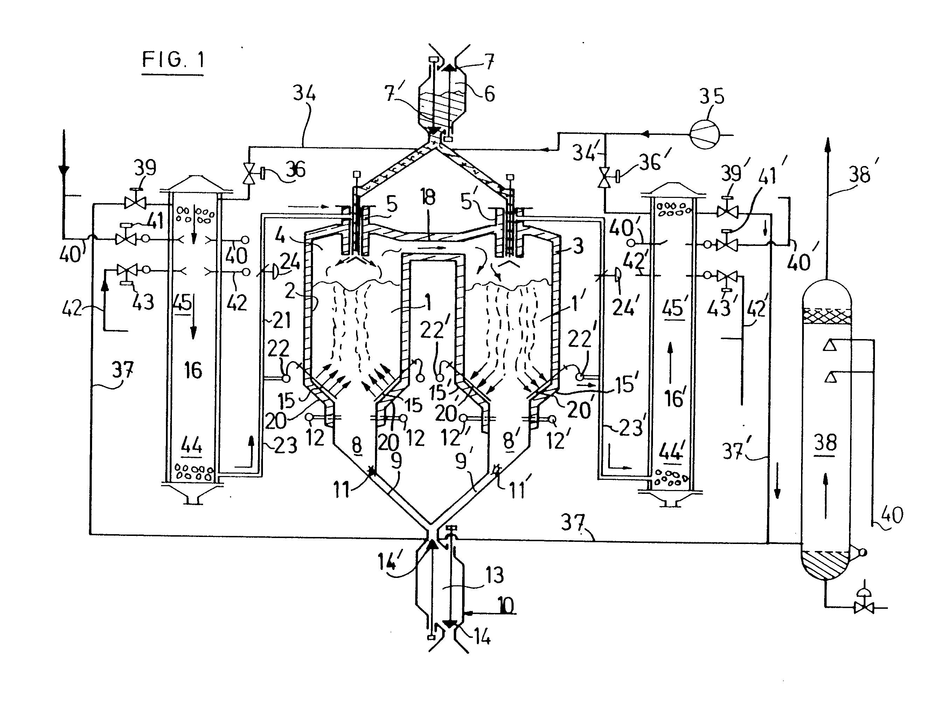

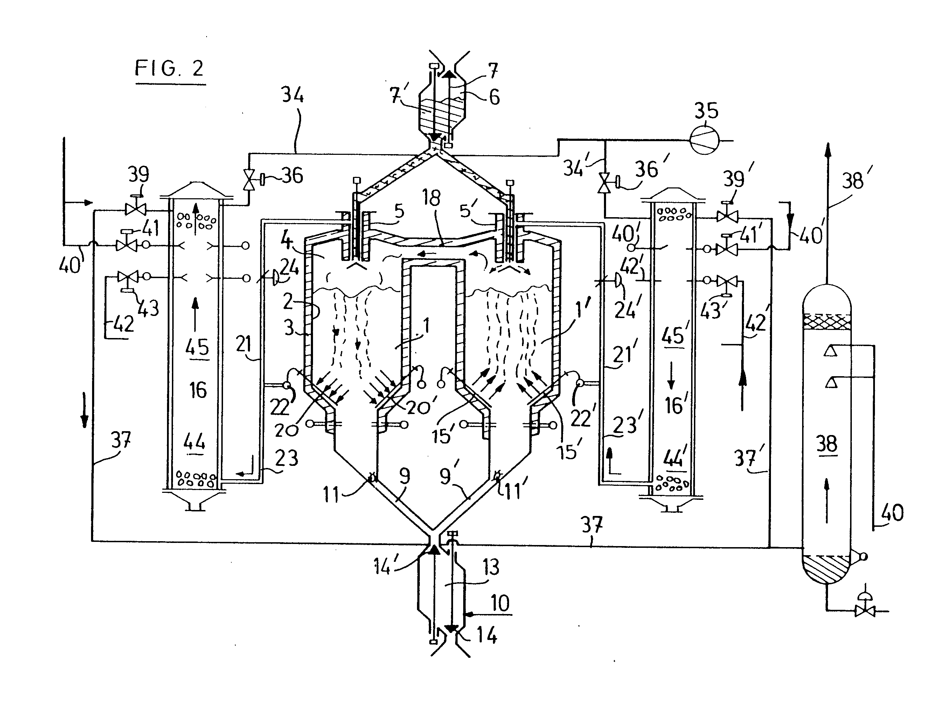

L'installation de gazéification de charbon, montrée aux figures 1 et 2, comporte deux enceintes désignées dans leur ensemble par les notations de référence 1, 1', constituées de deux cylindres verticaux. Les parois latérales de ces enceintes 1, 1', peuvent être garnies intérieurement d'un revêtement réfractaire 2 et/ou d'une enveloppe 3 à circulation d'eau en vue de produire de la vapeur.

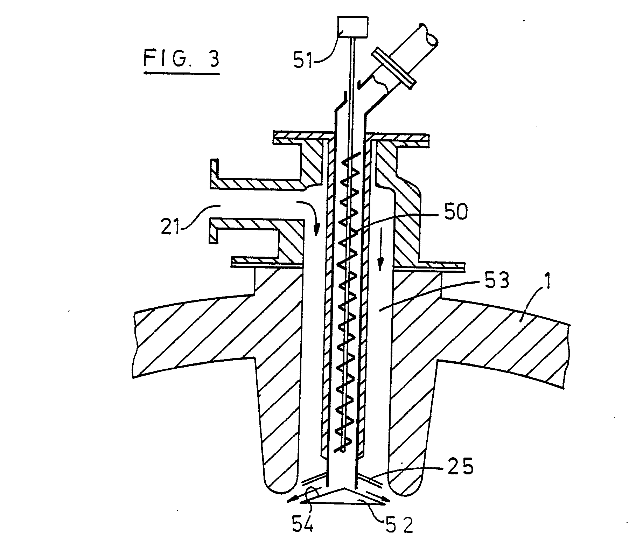

Dans la forme de réalisation illustrée à titre d'exemple aux figures 1 et 2, les enceintes sont munies à leur partie supérieure 4 d'un dispositif 5, 5' d'alimentation en charbon brut et d'injection d'une partie contrôlée du gaz réactif, assurant la gazéification des particules fines de charbon — ce dispositif est représenté plus en détail dans la figure 3.

Le charbon est issu d'un réservoir étanche et sous pression 6, muni d'une paire d'obturateurs 7, 7', permettant d'alimenter les dispositifs 5 et 5' tout en maintenant l'installation de gazéification de charbon sous pression.

A la partie inférieure 8, 8' de chacune des enceintes 1, 1', est prévu un collecteur de cendres 9, 9' dans lequel les cendres sont refroidies par injection de vapeur d'eau ou d'air en 12, 12'. A sa partie supérieure, chaque collecteur de cendres 9, 9' comporte un dispositif 11, 11' transférant les cendres vers le sas d'évacuation étanche 10 constitué d'un récipient 13 et de vannes d'obturation 14, 14'.

Les enceintes 1, 1', communiquent entre elles à leur partie supérieure pour permettre aux gaz produits de passer d'une enceinte à l'autre.

Dans la partie inférieure des enceintes 1, 1' débouchent, à des niveaux différents, des moyens d'injection 15, 15', de gaz réactifs, en l'occurrence de l'air ou de l'oxygène comprimé et de la vapeur d'eau.

Les gaz de réaction sont évacués par les mêmes moyens d'injection ou éventuellement par des moyens d'évacuation séparés 20, 20'.

Les moyens d'injection 15, 15', les moyens d'évacuation 20, 20' et les dispositifs 5, 5' sont reliés par des conduits 21, 21' à un conduit commun 23, 23'. Dans les conduits 21, 21' sont montés des vannes de régulation 24, 24'.

Comme illustré à la figure 3, un dispositif diffuseur 25 distribue uniformément le charbon dans chaque réacteur.

Le charbon de répartition granulométrique étendue est introduit dans le réacteur par un appareil central de contrôle du débit (par exemple une vis).

De part et d'autre des enceintes 1, 1' sont montés des réchauffeurs-récupérateurs désignés dans leur ensemble par des notations 16, 16'. Chacun des réchauffeurs-récupérateurs 16, 16' est constitué par au moins une tour.

A la partie supérieure de chaque réchauffeur-récupérateur 16, 16', aboutit une tuyauterie 34, 34' d'alimentation en gaz réactifs, air ou oxygène, à partir d'un compresseur 35.

L'alimentation en gaz réactifs des réchauffeurs-récupérateurs 16, 16' est commandée par des vannes à inversion 36, 36'.

La partie supérieure des réchauffeurs-récupérateurs 16, 16' est également reliée par des tuyauteries 37, 37' à un conduit 38' d'évacuation des gaz de réaction et une tour de lavage 38.

Dans les tuyauteries 37, 37' sont montées des vannes à inversion 39, 39'.

Les réchauffeurs-récupérateurs 16, 16' sont alimentés en eau par des conduits 40, 40' munis de vannes à inversion 41, 41', ils sont également alimentés en vapeur d'eau par des conduits 42, 42' équipés de vannes à inversion 43, 43'.

Les réchauffeurs-récupérateurs 16, 16' sont disposés symétriquement par rapport aux enceintes 1, 1'. Ils contiennent des masses de garnissage 44, 45, 44', 45' servant à récupérer la chaleur sensible des gaz de réaction et à réchauffer les gaz réactifs. Les garnissages des réchauffeurs-récupérateurs peuvent être constitués de matériau de nature différente, par exemple éléments en alumine 44 pour la partie exposée aux températures élevées et billes de fonte 45 pour la partie soumise à des températures modérées.

Les vannes à inversion 36, 36', 39, 39', 41, 41', 43 et 43' sont actionnées par des moyens de commande, tels qu'un programmateur non montré.

La gazéification de charbon dans l'installation selon les figures 1 et 2 s'opère selon les cycles successifs suivants :

Dans un premier cycle, les gaz réactifs (air ou oxygène) venant du compresseur 35 sont admis dans le réchauffeur-récupérateur 16 par ouverture de la vanne 36. Dans ce même réchauffeur-récupérateur 16, sont amenées de l'eau et de la vapeur d'eau par ouverture des vannes 41 et 43.

Pendant la durée de ce cycle, c'est-à-dire pendant le temps d'ouverture des vannes 36, 39', 41 et 43, les vannes 36', 39, 41' et 43' sont fermées.

Le mélange de gaz réactifs en traversant le réchauffeur-récupérateur 16 absorbe la chaleur sensible accumulée dans les garnissages lors d'un cycle précédent et l'eau injectée s'y vaporise et l'ensemble des gaz réactifs est porté à très haute température.

Le mélange de gaz réactifs très chaud est alors amené par le conduit 23 d'une part vers les tuyères d'injection 15 localisées à la base de l'enceinte et d'autre part vers le dispositif d'alimentation en charbon 5 localisé au sommet de l'enceinte 1.

L'effluent gazeux qui se forme à la base de l'enceinte 1 par réaction entre lesdits gaz réactifs et le charbon et qui se déplace à contre-courant de l'écoulement du charbon est amené à la partie supérieure de cette enceinte 1.

La part de gaz réactifs dirigés vers le haut de l'enceinte 1, contrôlée par la vanne 24 entre en réaction avec le charbon frais introduit par le dispositif d'alimentation 5, les fines particules de charbon s'y gazéifient et le gaz ainsi formé se mélange avec le gaz issu du bas de l'enceinte 1 et la masse de gaz ainsi formée, ainsi que les fines particules de charbon entraînées sont transférées à la partie supérieure de l'enceinte 1' grâce au conduit de connexion 18.

Les gaz de réaction circulent ensuite dans l'enceinte 1' vers le bas, à co-courant avec le charbon introduit dans cette enceinte. A la base de l'enceinte 1', les gaz de réaction sont extraits de l'enceinte 1' grâce aux tuyères 15' vers le réchauffeur-récupérateur 16'. Au cours de cette phase, la vanne de réglage 24' est fermée.

Pendant leur passage dans le réchauffeur-récupérateur 16', les gaz de réaction cèdent leur chaleur sensible aux garnissages réfractaires 44' et 45'.

Les gaz de réaction sont évacués du réchauffeur-récupérateur 16' par la conduite 37' et la tour de lavage 38 en passant par la vanne 39' en position ouverte.

Le cycle de fonctionnement de l'installation illustrée à la figure 1 est ainsi terminé.

Après avoir purgé à la vapeur les réchauffeurs-récupérateurs 16, 16', le cycle suivant est mis en route, en obturant les vannes 36, 41, 43, 24, 39' et en ouvrant les vannes 36', 41', 43', 24', 39.

Comme illustré à la figure 2, les gaz réactifs, air ou oxygène, sont conduits du compresseur 35 à travers le conduit 34' vers le réchauffeur-récupérateur 16' par ouverture de la vanne 36'. Dans le même appareil, eau et vapeur sont introduites en ouvrant les vannes 41', 43'.

La durée du cycle est déterminée par le temps d'ouverture des vannes 36', 41', 43', 39, les vannes 36, 41, 43, 39' étant obturées.

Le mélange de gaz réactifs en traversant le réchauffeur-récupérateur 16 absorbe la chaleur sensible accumulée dans les garnissages lors d'un cycle précédent et l'eau injectée s'y vaporise et l'ensemble des gaz réactifs est porté à très haute température.

Le mélange de gaz réactifs très chaud est alors amené vers l'enceinte 1' par le conduit 23', d'une part vers les tuyères d'injection 15' localisées à la base de l'enceinte 1' et d'autre part vers le dispositif d'alimentation en charbon 5' localisé au sommet de l'enceinte 1'.

La part de gaz réactifs dirigée vers le haut est contrôlée au moyen de la vanne de contrôle partiellement ouverte 24'.

L'effluent gazeux qui se forme à la base de l'enceinte 1' au contact du charbon et qui se déplace à contre-courant de l'écoulement du charbon est amené par la partie supérieure dans l'enceinte 1, dans laquelle cet effluent circule à co-courant avec le charbon introduit dans cette enceinte 1.

4

De même, la part de gaz réactifs dirigé vers le haut de l'enceinte 1', contrôlée par la vanne 24' entre en réaction avec le charbon frais introduit par le dispositif d'alimentation 5', les fines particules de charbon s'y gazéifient et le gaz ainsi formé se mélange avec le gaz issu du bas de l'enceinte 1' et la masse de gaz ainsi formée, ainsi que les fines particules de charbon entraînées sont transférées à la partie supérieure de l'enceinte 1 grâce au conduit de connexion 18.

Les gaz de réaction circulent ensuite dans l'enceinte 1 vers le bas, à co-courant avec le charbon introduit dans cette enceinte. A la base de l'enceinte 1, les gaz de réaction sont extraits de l'enceinte 1 grâce aux tuyères 15 vers le réchauffeur-récupérateur 16. Au cours de cette phase, la vanne de réglage 24 est fermée.

Pendant leur passage dans le réchauffeur-récupérateur 16, les gaz de réaction cèdent leur chaleur sensible aux garnissages réfractaires 44 et 45.

Les gaz de réaction sont évacués du réchauffeur-récupérateur 16 par la conduite 37 et la tour de lavage 38 en passant par la vanne 39 en position ouverte.

Le cycle de fonctionnement de l'installation illustrée à la figure 2 est ainsi terminé.

On remarquera que le sens de circulation des gaz dans les enceintes 1, 1' et dans les réchauffeurs-récupérateurs 16, 16' est inversé dans des cycles consécutifs comme montré par les flèches des figures 1 et 2.

La description donnée plus haut révèle que, dans le procédé suivant l'invention, au cours de cycles successifs de durée prédéterminée, par exemple de 3 à 30 minutes, on injecte des gaz réactifs alternativement par le bas et par le haut de l'enceinte 1, puis par le bas et par le haut de l'autre enceinte 1', pendant que l'on évacue des gaz de réaction au bas de l'enceinte située en aval de celle dans laquelle sont injectés les gaz réactifs, ceux-ci étant préchauffés en les faisant passer dans le réchauffeur-récupérateur 16 qui est relié à l'enceinte alimentée en gaz réactifs en amont de cette enceinte. La chaleur sensible des gaz de réaction évacués de cette enceinte 1 au cours du cycle précédent, est accumulée dans le réchauffeur-récupérateur 16, tandis que la chaleur sensible des gaz de réaction évacués de l'autre enceinte 1' est récupérée dans l'autre réchauffeur-récupérateur 16' relié à cette autre enceinte en aval de cette dernière. Chacun des réchauffeurs-récupérateurs 16, 16' agissant respectivement comme accumulateur de la chaleur sensible de réaction et comme réchauffeur des gaz réactifs pendant les cycles successifs du procédé.

Comme montré plus haut, à chaque changement de cycle, on inverse simultanément le sens de circulation des gaz dans les enceintes 1, 1' et dans les réchauffeurs-récupérateurs 16, 16', associés à ces enceintes.

Malgré les moyens prévus aux tuyères 15 et 15', les gaz de réaction, en quittant les enceintes 1 et 1', entraînent une certaine quantité de poussières qui sont retenues sur les filtres non-montrés dont sont pourvus les tuyères 15 et 15'.

Lors de l'inversion des flux gazeux, les poussières sont libérées de ces filtres et entraînées vers l'intérieur des enceintes 1, 1'. Ce dépoussièrement des filtres insérés dans les tuyères 15 et 15' est notamment assuré grâce à un accroissement important et de peu de durée de gaz réactifs dès l'inversion du cycle. Ce phénomène est favorisé par le débit élevé de vapeur de balayage au moment de l'inversion. On empêche ainsi préventivement l'obstruction progressive des conduits, tuyères et réchauffeurs-récupérateurs.

Les effluents indésirables, tels que goudron, huiles, phénols, ammoniac, hydrocarbures lourds, et qui résultent de la dévolatilisation rapide du charbon au sommet des enceintes 1 et 1' sont détruits thermiquement par contact avec les nappes de charbon portées à haute température dans le centre et le bas de ces enceintes et transformés en gaz utile. Il en résulte que le gaz de réaction quittant le bas des enceintes est pratiquement exempt de ces effluents.

Une partie de la chaleur sensible des gaz de réaction, accumulée alternativement dans les réchauffeurs-récupérateurs 16, 16' est utilisée pour former la vapeur d'eau qui constitue un composant des gaz réactifs par évaporation de l'eau introduite par les conduits 40, 40'.

L'installation suivant l'invention comporte un nombre pair de réchauffeurs-récupérateurs 16, 16', disposés symétriquement de part et d'autre de l'ensemble des deux enceintes 1, 1', chacun des réchauffeurs-récupérateurs 16, 16' étant relié, d'une part, au moyen d'injection 15, 15' de gaz réactifs et au moyen d'évacuation 20, 20' des gaz de réaction d'une des enceintes 1, 1' et, d'autre part, à la source de gaz réactifs (compresseur 35) par une tuyauterie commune 34, 34' dans laquelle sont montées des vannes à inversion 36, 36', ainsi qu'au conduit d'évacuation 37, 37', également muni de vannes à inversion 39, 39' de manière à permettre aux gaz réactifs et aux gaz de réaction de circuler alternativement dans des sens opposés au cours des cycles successifs de fonctionnement de l'installation.

Il est à noter que les vannes à inversion 36, 36', 39, 39', 41, 41', 43 et 43' sont situées dans des parties de l'installation où elles ne sont jamais traversées par des gaz portés à haute température. Ceci constitue un avantage important par rapport aux systèmes connus dans lesquels les vannes à inversion sont situées dans des zones où circulent des gaz portés à haute température.

La figure 3 des dessins ci-annexés montre à plus grande échelle le dispositif en alimentation en charbon placé au sommet des enceintes 1 et 1'. Ce dispositif comporte un moyen d'injection d'une quantité contrôlée de charbon, par exemple une vis sans fin 50 à vitesse réglable par un moteur 51 et un diffuseur de gaz réactifs 52 destiné à disperser le charbon par entraînement en rotation, grâce à l'impulsion fournie par le gaz réactif incorporé dans l'espace annulaire 53 et aux inclinaisons des aubes du diffuseur 52.

Les fines particules de charbon sont directement gazéifiées à la sortie du diffuseur, ce qui provoque un échauffement rapide du charbon et empêche celui-ci de s'agglutiner, quelles que soient ses caractéristiques propres.

La tuyère 15 amovible est garnie intérieurement d'un filtre réfractaire non montré, destiné à capter les fines poussières de cendres et empêcher celles-ci de se transférer vers les réchauffeurs-récupérateurs.

Comme indiqué précédemment, les poussières accumulées sur ce filtre pendant la phase d'extraction de gaz de réaction issu de l'enceinte du gazogène, sont rejetées dans cette même enceinte lors de la phase suivante d'injection de gaz réactif dans le réacteur. Cette action de dépoussièrement est accentuée au moment de l'inversion par un débit accéléré.

Les tuyères 15 sont raccordées à un collecteur annulaire 22 garni de matériaux réfractaires et isolants qui encercle la base des enceintes des gazogènes 1, 1'.

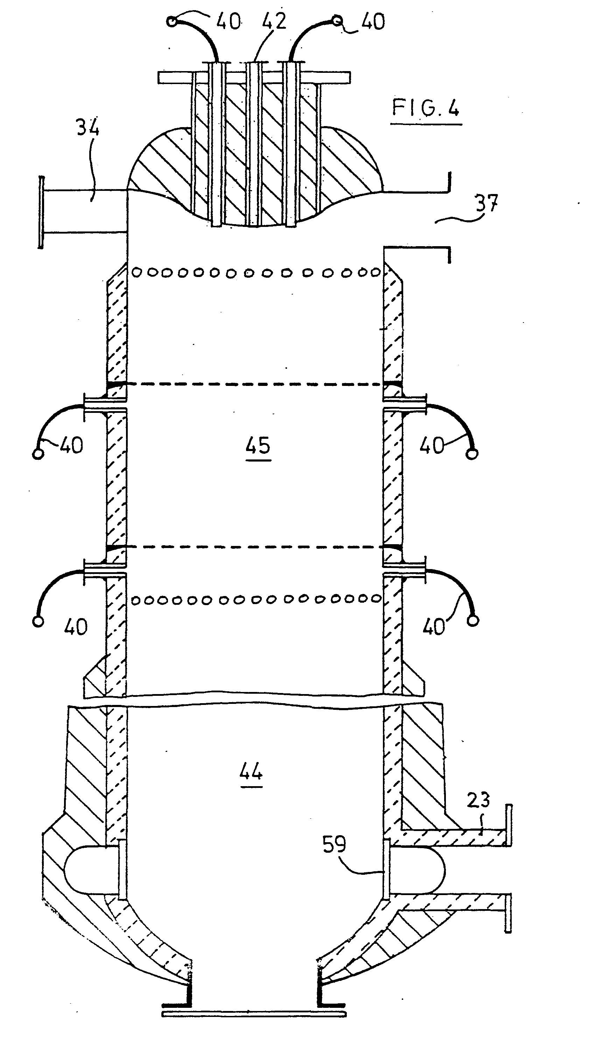

La figure 4 montre également à grande échelle un réchauffeur-récupérateur 16 constitué d'un cylindre vertical garni de matériaux réfractaires et isolants appropriés et rempli de masses de garnissage 45 et 44.

Les gaz de réaction sont évacués du réchauffeur-récupérateur 16 par la conduite 37. L'alimentation en eau est réalisée par les conduits 40 et en vapeur d'eau par le conduit 42.

Les orifices du réchauffeur-récupérateur sont équipés de grilles de rétention 59 des particules de cendres.

Le procédé suivant l'invention présente des avantages importants par rapport aux procédés connus. Son cycle de fonctionnement ne comprend que deux phases. Ces deux phases sont séparées par une brève période de balayage par la vapeur pour éviter la formation d'un mélange explosible et éviter la présence de traces d'oxygène dans le gaz de réaction produit dans le gazogène.

Le procédé permet une conversion pratiquement complète du charbon en gaz combustible disponible. Cette conversion s'effectue sensiblement en l'absence de sous-produits à traiter et à valoriser, tels que goudrons, phénols, hydrocarbures et ammoniac. Il permet de traiter simultanément et valoriser des résidus pétroliers, ou des cokes de pétrole et des fines de charbon.

Ce procédé permet des gains substantiels sur le plan des besoins en oxygène ou en air comprimé. La consommation d'eau est également inférieure à celle des procédés conventionnels.

L'installation elle-même offre de nombreux avantages.

Les vannes à inversion 36, 36', 39, 39', 41, 41', 43, 43' sont montées dans des zones de température faible ; ceci réduit considérablement le danger d'inétanchéité des vannes et en particulier le danger que présenterait le passage d'une certaine quantité d'air ou d'oxygène dans le gaz produit. De plus, le système permet le fonctionnement sous pression élevée.

Les réchauffeurs-récupérateurs permettent une récupération de la chaleur emportée par les gaz de réaction produits avec un rendement thermique élevé voisin de 90 %.

Le fonctionnement cyclique du procédé permet de réduire sensiblement la tendance à la fusion permanente des cendres ; ceci permet de réduire sensiblement les besoins en vapeur sans risque d'écoulement en phase liquide des cendres, ce gain en vapeur conduit à une amélioration du rendement. D'autre part, les cendres de forme vitrifiée sont utilisables comme matériaux de charge.

Enfin, les investissements nécessaires pour la construction de l'installation susdite sont nettement inférieurs à ceux d'autres installations connues en raison de la moindre importance des installations auxiliaires, par exemple pour la production d'oxygène et le traitement d'eau de chaudière. Les investissements diminuent également en raison du fait qu'il n'est plus nécessaire d'éliminer et de traiter des sous-produits de gaz de réaction. En outre, le procédé et l'installation suivant l'invention peuvent être conçus pour la fabrication de gaz utilisables à diverses fins.

Le tableau I rassemble d'ailleurs les caractéristiques de fonctionnement théoriques de ce procédé sous diverses conditions opératoires.

Le tableau II compare le procédé suivant l'invention utilisé à diverses fins et le compare chaque fois avec un procédé connu, approprié pour chacun des usages susdits.

(Voir Tableau I page 7)

Tableau I

Caractéristiques de fonctionnement du gazogène suivant l'invention

| Type de gaz | Gazéification à l'oxygène | | Gazéification à l'air | |
|---|---|---|---|---|
| Utilisation | Gaz à moyen PC ou SNG | Gaz synthèse | Usage industriel | Turbine à gaz-cycle combiné |
| Pression | 30 | 30 | 3 bars | 18 bars |
| Pour 1 kg charbon (moles) Oxygène Air Vapeur réaction Gaz fabriqué | 20,60 — 36,7 109,8 | 24,6 — 120 221,8 | — 116,6 19,1 212,2 | 102,3 37,2 207,7 |
| Composition gaz % $CH_4$ $H_2O$ CO $CO_2$ $H_2$ $N_2$ $H_2S$ + COS | 8,7 8,3 43,9 8,0 29,5 1,4 0,2 | 0,5 33,7 20,3 11,9 32,6 0,9 0,1 | 0,5 0,5 33,3 0,5 21,4 43,8 0,1 | 3,2 4,9 27,0 4,7 20,8 39,3 0,1 |
| Contenu énergétique, gaz fabriqué en kJ | 31.871 | 31.260 | 31.878 | 31.788 |
| Rendement brut gazéification | 0,916 | 0,899 | 0,917 | 0,91 |
| Energie d'appoint en kJ Vapeur Energie en kJ | 136 1200 | 4.000 1.490 | — 600 | — — |
| Rendement net Gazéification + vapeur | 0,90 | 0,82 | 0,917 | 0,91 |
| Energie électrique (compress, oxygène) | 0,04 | 0,048 | 0,019 | rendement cycle combiné 0,39 à 0,425 |

(Voir Tableau II page 8)

**0 089 329**

Tableau II

Comparaison des performances du gazogène à charbon suivant l'invention à d'autres procédés industriels

| Usage | Gaz moyen PC | Gaz synthèse | Gaz industriel | Cycle combiné |
|---|---|---|---|---|
| Pression bars | 30 | 30 | 3 | 18 |
| Procédé de référence | Lürgi BCG-Lurgi | Texaco | Gaz intégral + compression | Texaco |
| Oxygène mole/6J Consom. électricité pour compres. Nouveau Référence | 620 730 15 % | 780 1200 35 % | 5,1 kwh/GJ 17 kwh/GJ | – – |
| Rendement net xx Nouveau Référence Gain | 0,90 0,80 13 % | 0,82 0,73 12 % | 0,91 0,82 13 % | 0,90 0,76 10 % |
| Besoin en eau Rapport nouveau référence | 0,5. | 0,5 | 0,5 | 0,3 |
| Investissement Rapport nouveau référence | 0,80 | 0,80 | 0,85 | 0,75 |

xx : rendement net = Calories contenues dans le gaz et résidus combustibles/Calories charbon de gazéification et vapeur

Il est évident que l'invention n'est pas limitée aux détails décrits plus haut, relatifs à une forme de réalisation particulière de l'installation de gazéification et que de nombreuses modifications peuvent être apportées à ces détails sans sortir du cadre de l'invention.

Ainsi, le gazogène peut se composer de deux enceintes distinctes contenues dans une enveloppe commune dans laquelle on injecte des gaz réactifs horizontalement alternativement d'un côté d'une des enceintes, puis de l'autre côté, pendant qu'on évacue des gaz de réaction de l'enceinte du côté opposé à celui où sont injectés les gaz réactifs.

**Revendications**

1. Installation de gazéification de charbon dans une paire d'enceintes communiquant entre elles à leur partie supérieure pour permettre le passage de gaz d'une enceinte dans l'autre et comprenant un dispositif d'alimentation en charbon par le haut, au moins une source de gaz réactifs, un conduit d'évacuation des gaz de réaction, ainsi que des moyens pour injecter les gaz réactifs et évacuer les gaz de réaction tour à tour dans chacune des enceintes, caractérisée en ce qu'elle comporte un nombre pair de réchauffeurs-récupérateurs (16, 16') disposés symétriquement de part et d'autre de l'ensemble des deux enceintes (1, 1'), chaque réchauffeur-récupérateur (16, 16') étant relié d'une part, à des moyens (15, 15') d'injection des gaz réactifs et à des moyens (20, 20') d'évacuation des gaz de réaction d'un gazogène par une tuyauterie (21, 21', 23, 23') commune et d'autre part à la source des réactifs par les tuyauteries (34, 34',

8

40, 40', 42, 42') dans lesquelles sont montées des vannes à inversion (36, 36', 41, 41', 43, 43'), ainsi qu'au conduit d'évacuation (37, 37') des gaz de réaction également muni de vannes à inversion (39, 39'), de manière à permettre aux gaz réactifs et aux gaz de réaction de circuler sous une pression comprise entre 200 et 3 000 kPa (2 et 30 bars) alternativement dans un sens puis dans l'autre dans les réchauffeurs-récupérateurs (16, 16'), au cours de cycles successifs de durée prédéterminée.

2. Installation suivant la revendication 1, caractérisée en ce qu'elle comporte des moyens de commande agissant sur les vannes susdites, de façon à permettre l'admission des gaz réactifs dans un réchauffeur-récupérateur (16), tout en isolant ce réchauffeur-récupérateur (16) du conduit d'évacuation (37) des gaz de réaction et de façon à interdire simultanément l'admission des gaz réactifs dans l'autre réchauffeur-récupérateur (16'), tout en permettant l'évacuation des gaz de réaction de cet autre réchauffeur-récupérateur, par la conduite d'évacuation (37') des gaz de réaction, au cours des cycles successifs.

3. Installation suivant l'une quelconque des revendications précédentes, caractérisée en ce que chaque réchauffeur-récupérateur contient des masses de garnissage (44, 45 et 44', 45') destinées à récupérer la chaleur sensible des gaz de réaction au cours d'un cycle et à réchauffer les gaz réactifs au cours du cycle suivant.

4. Installation suivant l'une quelconque des revendications précédentes, caractérisée en ce qu'elle comporte des moyens (42, 42') pour introduire, dans l'un puis dans l'autre réchauffeur-récupérateur (16, 16') de l'eau destinée à y être transformée en vapeur d'eau en utilisant une partie de la chaleur sensible des gaz de réaction récupérée dans ces réchauffeurs-récupérateurs (16, 16'), cette vapeur d'eau constituant un des composants des gaz réactifs.

5. Installation suivant l'une quelconque des revendications précédentes, caractérisée en ce que les moyens d'injection de gaz réactifs et d'évacuation des gaz de réaction, placés sur les gazogènes sont constitués par des tuyères (15, 15', 20, 20') uniformément réparties à la base des enceintes (1, 1').

6. Installation suivant l'une quelconque des revendications précédentes, caractérisée en ce que le charbon à gazéifier, de toute nature et de granulométrie quelconque, est injecté dans la partie supérieure (4, 4') des enceintes au moyen d'un dispositif (5, 5') constitué d'une vis sans fin (50) et d'un déflecteur (25).

7. Procédé de gazéification de charbon à inversion cyclique, mettant en œuvre une paire d'enceintes communiquant entre elles à leur partie supérieure et comprenant un dispositif d'alimentation en charbon susdit par le haut et dans lequel, au cours des cycles successifs de durée prédéterminée, on injecte des gaz réactifs dans une des enceintes, puis dans l'autre enceinte, pendant qu'on évacue les gaz de réaction par le bas de l'enceinte située en aval de celle dans laquelle sont injectés les gaz réactifs, procédé suivant lequel au cours de chacun des cycles précités, on réchauffe les gaz réactifs destinés à être injectés dans une des enceintes (1) en les faisant passer dans un réchauffeur-récupérateur (16) qui est relié à cette enceinte (1) en amont de celle-ci et dans lequel a été récupérée, au cours du cycle précédent, la chaleur sensible des gaz de réaction évacués de cette enceinte (1), tandis qu'on récupère la chaleur sensible des gaz de réaction dans un réchauffeur (16'), qui est relié à cette autre enceinte (1') en aval de cette dernière, chaque réchauffeur (16, 16') agissant alternativement comme récupérateur de chaleur sensible des gaz de réaction et comme réchauffeur des gaz réactifs, pendant les cycles successifs susdits, caractérisé en ce qu'on gazéifie le charbon sous une pression comprise entre 200 et 3 000 kPa (2 à 30 bars).

8. Procédé suivant la revendicatin 7, caractérisé en ce qu'on a effectué les réactions de gazéification en lit composite, c'est-à-dire constitué d'un lit fixe de charbon à la base des enceintes et d'un lit entraîné à la partie supérieure des enceintes, les deux lits étant alimentés simultanément en gaz réactifs, le lit fixe l'étant par la base de l'enceinte et le lit entraîné par le haut de celle-ci.

9. Procédé suivant l'une quelconque des revendications précédentes, caractérisé en ce que l'on utilise tout type de charbon brut en l'état, quelles que soient ses propriétés physiques ou chimiques.

10. Procédé suivant l'une quelconque des revendications précédentes, caractérisé en ce que l'injection de réactifs par le bas et l'évacuation des gaz de réaction sont réalisés par des tuyères réversibles assurant la filtration des courants gazeux, empêchant ainsi l'entraînement des fines particules solides.

11. Procédé suivant l'une quelconque des revendications précédentes, caractérisé en ce qu'on utilise une partie de la chaleur sensible des gaz de réaction récupérée dans le cycle précédent, dans des réchauffeurs-récupérateurs (16 et 16'), en introduisant de l'eau pour former de la vapeur d'eau qui constitue un composant des gaz réactifs.

## Claims

1. An installation for gasifying coal in a pair of chambers in communication with each other at their upper parts to allow gas to pass from one chamber into the other and comprising a device for supplying coal from above, at least one source of reactive gases, an exhaust pipe for the gases of reaction, as well as means for injecting the reactive gases and evacuating the gases of reaction in turns in each of the chambers, characterized in that it comprises an even number of heater-recuperators (16, 16') arranged symmetrically either side of the set of two chambers (1, 1'), each heater-recuperator (16, 16') being connected on the one hand to means (15, 15') of injecting the reactive gases and to means (20, 20') of evacuating the gases of reaction from a gas generator by a common pipe system (21, 21' ; 23, 23') and on the other hand to the source of the reagents by the pipes (34, 34', 40, 40', 42, 42') in which there are mounted inversion valves (36, 36', 41, 41', 43, 43'), as well as to the reaction gas exhaust pipe (37, 37') also equipped with inversion valves (39, 39'), so as to allow the reactive gases and the gases of reaction to circulate at a pressure of between 200 and 3 000 kPa (2 and 30 bar) alternately in one direction and then in the other in the heater-recuperators (16, 16') in the course of successive cycles of predetermined duration.

2. An installation according to claim 1, characterized in that it comprises control means acting on the above-mentioned valves, so as to allow the admission of the reactive gases into a heater-recuperator (16), while at the same time isolating this heater-recuperator (16) from the reaction gas exhaust pipe (37) and so as to prevent simultaneously the admission of the reactive gases into the other heater-recuperator (16') while allowing the evacuation of the gases of reaction from this other heater-recuperator by way of the reaction gas exhaust pipe (37'), in the course of the successive cycles.

3. An installation according to either one of the preceding claims, characterized in that each heater-recuperator contains lining masses (44, 45 and 44', 45') for recovering the sensible heat from the gases of reaction in the course of a cycle and heating the reactive gases in the course of the following cycle.

4. An installation according to any one of the preceding claims, characterized in that it comprises means (42, 42') for introducing, into one and then the other heater-recuperator (16, 16'), water intended for transformation into steam using part of the sensible heat from the gases of reaction recovered in these heater-recuperators (16, 16'), this steam constituting one of the components of the reactive gases.

5. An installation according to any one of the preceding claims, characterized in that the means, fitted on the gas generators, of injecting reactive gases and of evacuating the gases of reaction consist of nozzles (15, 15', 20, 20') uniformly spread over the base of the chambers (1, 1').

6. An installation according to any one of the preceding claims, characterized in that the coal to be gasified, of any type and any granulometry, is injected into the upper parts (4, 4') of the chambers by means of a device (5, 5') consisting of an endless screw (50) and a deflector (25).  .

7. A cyclic inversion process for gasifying coal, using a pair of chambers communicating with each other at their upper part and comprising a device for supplying the above-mentioned coal from above and in which, in the course of successive cycles of predetermined duration, reactive gases are injected into one of the chambers, then into the other chamber, while the gases of reaction are evacuated through the base of the chamber situated downstream of that into which the reactive gases are injected, in which process, in the course of each of the afore-mentioned cycles, the reactive gases to be injected into one of the chambers (1) are heated by being sent into a heater-recuperator (16) which is connected to this chamber (1) upstream thereof and in which there has been recovered, in the course of the preceding cycle, the sensible heat from the gases of reaction evacuated from this chamber (1), while the sensible heat from the gases of reaction is recovered in a heater (16') which is connected to the other chamber (1') downstream thereof, each heater (16, 16') acting alternately as a recuperator of sensible heat from the gases of reaction and as a heater of the reactive gases, during the above-mentioned successive cycles, characterized in that the coal is gasified at a pressure of between 200 and 3 000 kPa (2 to 30 bar).

8. A process according to claim 7, characterized in that the gasification reactions are effected in a composite bed, that is to say a bed consisting of a fixed bed of coal at the chamber bases and an entrained bed at the upper parts of the chambers, the two beds being fed simultaneously with reactive gases, the fixed bed being fed by way of the base of the chamber and the entrained bed by way of the top thereof.

9. A process according to any one of the preceding claims, characterized in that any type of unwashed coal is used, as it is, whatever its physical or chemical properties.

10. A process according to any one of the preceding claims, characterized in that the injectin of reagents through the base and the evacuation of the gases of reaction are effected by reversible nozzles ensuring filtration of the streams of gas, thus preventing the entrainment of fine solid particles.

11. A process according to any one of the preceding claims, characterized in that part of the sensible heat recovered from the gases of reaction in the preceding cycle is used in heater-recuperators (16 and 16'), through the introduction of water, to form steam, which constitutes a component of the reactive gases.

**Patentansprüche**

1. Vorrichtung zur Kohlevergasung in einem Paar von Klammern, die untereinander in ihrem oberen Teil kommunizieren, um den Durchgang des Gases von einer Kammer in die andere zu erlauben, mit einer Einrichtung zur Beschickung mit Kohle von oben, mindestens einer Gasreaktant-Quelle, einer Reaktionsgas-Abführleitung, sowie Mitteln zum aufeinanderfolgenden Einbringen der Gasreaktanten in und zum Abführen der Reaktionsgase aus jeder der Kammern, dadurch gekennzeichnet, daß sie eine gerade Anzahl von Vorwärmer-Rekuperatoren (16, 16') aufweist, die symmetrisch beidseits der Einheit der beiden Kammern (1, 1') angeordnet sind, wobei jeder Vorwärmer-Rekuperator (16, 16') einerseits mit Mitteln (15, 15') zum Einbringen von Gasreaktanten und Mitteln (20, 20') zum Abführen von Reaktionsgasen von einem Gaserzeuger über eine gemeinsame Leitung (21, 21', 23, 23') und anderseits über die Leitungen (34, 34', 40, 40', 42, 42'), in denen Umkehrventile (36, 36', 41, 41', 43, 43') vorgesehen sind, mit der Reaktantenquelle sowie mit der Leitung (37, 37') zum Abführen der Reaktionsgase, welche gleichfalls mit Umkehrventilen (39, 39') versehen ist, verbunden ist, so daß die Gasreaktanten und die Reaktionsgase unter einem zwischen 200 und 3 000 kPa (2 und 30 bar) liegenden Druck abwechselnd in die eine und dann in die andere Richtung in den Vorwärmer-Rekuperatoren (16, 16') während aufeinanderfolgender Zyklen vorherbestimmter Dauer zirkulieren können.

2. Vorrichtung nach Anspruch 1, dadurch gekennzeichnet, daß sie auf die vorgenannten Ventile derart wirkende Steuermittel aufweist, um in aufeinanderfolgenden Zyklen das Zuströmen der Gasreaktanten in einen Vorwärmer-Rekuperator (16) zu erlauben, wobei dieser Vorwärmer-Rekuperator (16) gleichzeitig von der Leitung (37) zum Abführen der Reaktionsgase abgesperrt ist, und um gleichzeitig das Zuströmen von Gasreaktanten in den anderen Vorwärmer-Rekuperator (16') zu unterbinden, während das Abführen von Reaktionsgasen aus diesem anderen Vorwärmer-Rekuperator über die Leitung (37') zum Abführen von Reaktionsgasen ermöglicht ist.

3. Vorrichtung nach einem der vorhergehenden Ansprüche, dadurch gekennzeichnet, daß jeder Vorwärmer-Rekuperator Auskleidungsmassen (44, 45 und 44', 45') enthält, die dazu bestimmt sind, während eines Zyklus die merkbare Wärme der Reaktionsgase zu speichern und die Gasreaktanten während des darauffolgenden Zyklus vorzuwärmen.

4. Vorrichtung nach einem der vorhergehenden Ansprüche, dadurch gekennzeichnet, daß sie Mittel (42, 42') aufweist, um in den einen und dann in den anderen Vorwärmer-Rekuperator (16, 16') Wasser einzuführen, das dort durch Einsatz eines Teiles der in diesen Vorwärmer-Rekuperatoren (16, 16') gespeicherten merkbaren Wärme der Reaktionsgase in Wasserdampf umgewandelt werden soll, der einen der Bestandteile der Gasreaktanten bildet.

5. Vorrichtung nach einem der vorhergehenden Ansprüche, dadurch gekennzeichnet, daß die auf den Gaserzeugern angeordneten Mittel zum Einbringen der Gasreaktanten und zum Abführen der Reaktionsgase auf dem Boden der Kammern (1, 1') gleichmäßig verteilte Düsen (15, 15', 20, 20') sind.

6. Vorrichtung nach einem der vorhergehenden Ansprüche, dadurch gekennzeichnet, daß die zu vergasende Kohle beliebiger Art und Korngröße in den oberen Teil (4, 4') der Kammern mittels einer aus einer Führungsschnecke (50) und einer Ablenkplatte (25) bestehenden Einrichtung (5, 5') zugeführt wird.

7. Verfahren zur Kohlevergasung mit zyklischer Umkehr, bei dem ein Paar im oberen Teil untereinander kommunizierender Kammern mit einer Einrichtung zur Beschickung mit Kohle von oben eingesetzt wird, und bei dem während aufeinanderfolgender Zyklen vorherbestimmter Dauer Gasreaktanten in die eine der Kammern und dann in die andere Kammer eingebracht werden, während die Reaktionsgase über den Boden jener Kammer abgeführt werden, die stromabwärts von jener Kammer gelegen ist, in die die Gasreaktanten eingebracht werden, bei welchem Verfahren während jedes der vorgenannten Zyklen die Gasreaktanten, die in eine der Kammern (1) eingebracht werden sollen, vorgewärmt werden, indem sie in einen Vorwärmer-Rekuperator (16) geleitet werden, der mit dieser stromaufwärts jener gelegenen Kammer (1) verbunden ist und in den während des vorhergehenden Zyklus die merkbare Wärme der aus dieser Kammer (1) abgeführten Reaktionsgase gespeichert wurde, während die merkbare Wärme der Reaktionsgase in einem Vorwärmer (16') gespeichert wird, der mit dieser anderen stromabwärts der letzteren gelegenen Kammer (1') verbunden ist, wobei während der vorgenannten aufeinanderfolgenden Zyklen jeder Vorwärmer (16, 16') abwechselnd als Speicher für die merkbare Wärme der Reaktionsgase und als Vorwärmer für die Gasreaktanten wirkt, dadurch gekennzeichnet, daß die Kohle unter einem zwischen 200 und 3 000 kPa (2 bis 30 bar) gelegenen Druck vergast wird.

8. Verfahren nach Anspruch 7, dadurch gekennzeichnet, daß die Vergasungsreaktionen in einem zusammengesetzten Bett, d. h. gebildet aus einem festen Kohlebett am Boden der Kammer und einem in den oberen Teil der Kammern mitgeführten Bett, vorgenommen wird, wobei die beiden Betten gleichzeitig mit Gasreaktanten gespeist werden, und zwar das feste Bette über den Boden der Kammer und das mitgeführte Bett von ihrem Oberteil her.

9. Verfahren nach einem der vorhergehenden Ansprüche, dadurch gekennzeichnet, daß jede Art von Rohkohle, unabhängig von ihren physikalischen oder chemischen Eigenschaften, verwendet wird.

10. Verfahren nach einem der vorhergehenden Ansprüche, dadurch gekennzeichnet, daß die Einbringung der Reaktanten von unten und die Abführung der Reaktionsgase über umkehrbare Düsen erfolgt, die die Filtrierung der Gasströme gewährleisten und so die Mitnahme feiner Feststoffteile verhindern.

11. Verfahren nach einem der vorhergehenden Ansprüche, dadurch gekennzeichnet, daß ein Teil der im vorhergehenden Zyklus gespeicherten merkbaren Wärme der Reaktionsgase in den Vorwärmer-Rekuperatoren (16 und 16') benutzt wird, indem Wasser zugeleitet wird, um Wasserdampf zu erzeugen, der einen Bestandteil der Gasreaktanten bildet.

FIG. 1

FIG. 2

FIG. 3

51

21

50

53    1

25

54      52

0 089 329

FIG. 4